# EUROPEAN PATENT APPLICATION

(11) **EP 0 854 629 A2**
(43) Date of publication of application: **22.07.1998**
(21) Application number: 98300352.6
(22) Date of filing: 19.01.1998
(51) Int. Cl.: H04N 1/00

(54) **Method of recording receiving information in a facsimile**

(30) Priority: 17.01.1997 KR 9701229
(71) Applicant: Samsung Electronics Co., Ltd., Suwon-city, Kyungki-do (KR)
(72) Inventor: Kim, Yong-Woo, Ahnyang-city, Kyungki-do (KR)
(74) Representative: Tunstall, Christopher Stephen

(57) **Abstract**

A facsimile is described which when receiving a facsimile message transmitted from a calling facsimile and prints the received facsimile message together with information identifying its local time of receipt. For each page of the facsimile message, the facsimile determines whether the current page of the facsimile message has been completely received and, if so, prints the current page together with a calling subscriber identification (CSI), the local time of receipt and a page number, at the bottom of the page.

## Description

### BACKGROUND OF THE INVENTION

The present invention relates to a facsimile and its method of operation.

In general, a calling facsimile transmits a facsimile message together with transmitting information such as an ID (identification) code, the page number of the sheet transmitted, the transmission date and time, etc. Then, a called facsimile prints the transmitting information received from the calling facsimile on a particular place (e.g., on the top) of every sheet of record paper. The ID code commonly employs a CSI (Calling Subscriber Identification) code, which includes a national code, an area code and a subscriber number (i.e., the telephone number of the subscriber). That is, the CSI code includes the full telephone number of the calling subscriber, including the national code and the area code. Furthermore, the transmission time is the local time of the area in which the calling subscriber is located.

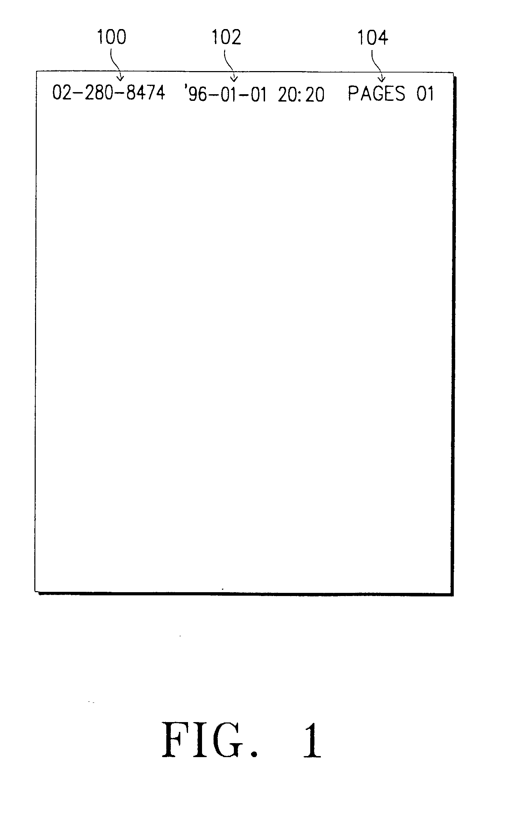

Fig. 1 shows the transmitting information of the facsimile message that a called facsimile has printed on the top of the recording sheet. In the drawing, "02-280-8474" 100 represents the CSI code, "'96-01-01 20:20" 102 represents the transmission date and time and "PAGES 01" 104 represents the page number of sheets transmitted. Thus, the called subscriber may recognize the calling subscriber and the transmission time of the facsimile message, based on the transmitting information printed on the recording sheet.

However, when there is a time difference between the calling subscriber and the called subscriber, the conventional facsimile prints only the local time of the area in which the calling subscriber is located. Hence, it may be difficult for the called subscriber to recognize the exact time at which the facsimile message is received. Of course, the called subscriber may calculate the exact time of receipt based on the time difference between the calling subscriber and the called subscriber. However, this is very troublesome, particularly if the called subscriber has received facsimile messages from many different callers in different nations.

Further, if the calling facsimile does not have the functionality for transmitting the transmitting information, the called subscriber may not recognize the exact time of receipt of the facsimile message. Of course, in this case, the called subscriber may print out a journal report which is recorded in the called facsimile every time a message is received, to check the receiving time of the facsimile message. However, this causes great inconvenience to the called subscriber. Furthermore, the called subscriber must suffer the inconvenience of filing the facsimile message together with the separate journal report.

Also, in some facsimiles, the called subscriber may set the facsimile to print out automatically a confirmation report which includes the transmitting information every time a facsimile message is received, but this results in wastage of the record paper.

### SUMMARY OF THE INVENTION

It is therefore an objective of the present invention to provide an improved method for printing receiving information of a facsimile message on a recording sheet.

Accordingly, the present invention provides a method of operating a facsimile comprising:
receiving a facsimile message transmitted from a calling facsimile; and
printing the received facsimile message together with information identifying its local time of receipt.

Preferably, the method comprises, for each page of the facsimile message:
determining that the current page of the facsimile message has been completely received; and
printing the current page together with the said information.

Preferably, the said information identifying the local time of receipt of the facsimile message is its local time of receipt. Preferably, the said information is printed together with a calling subscriber identification (CSI) and/or a page number of the received sheets. Preferably, the said information is printed on the bottom of every sheet.

The present invention further provides a facsimile comprising:
means for receiving a facsimile message transmitted from a calling facsimile; and
means for printing the received facsimile message together with information identifying its local time of receipt.

Preferably, the means for printing the received facsimile message is adapted, for each page of the facsimile message, to operate as follows:
to determine whether the current page of the facsimile message has been completely received; and
if so, to print the current page together with the said information.

Preferably, the means for printing the received facsimile message is adapted to print the said information on the bottom of every sheet.

### BRIEF DESCRIPTION OF THE DRAWINGS

The present invention will now be described by way of example with reference to the accompanying drawings in which:
Fig. 1 shows a recording sheet on the top of which transmitting information of a facsimile message is printed according to the conventional method;
Fig. 2 shows a schematic block diagram of a common facsimile to which the present invention is applicable;
Fig. 3 shows a known control procedure for transmitting a facsimile message;
Fig. 4 is a flow chart showing the printing of receiving information of a facsimile message according to the present invention; and
Fig. 5 shows a recording sheet on the bottom of which receiving information of a facsimile message is printed according to the present invention.

### DETAILED DESCRIPTION OF THE PREFERRED EMBODIMENT

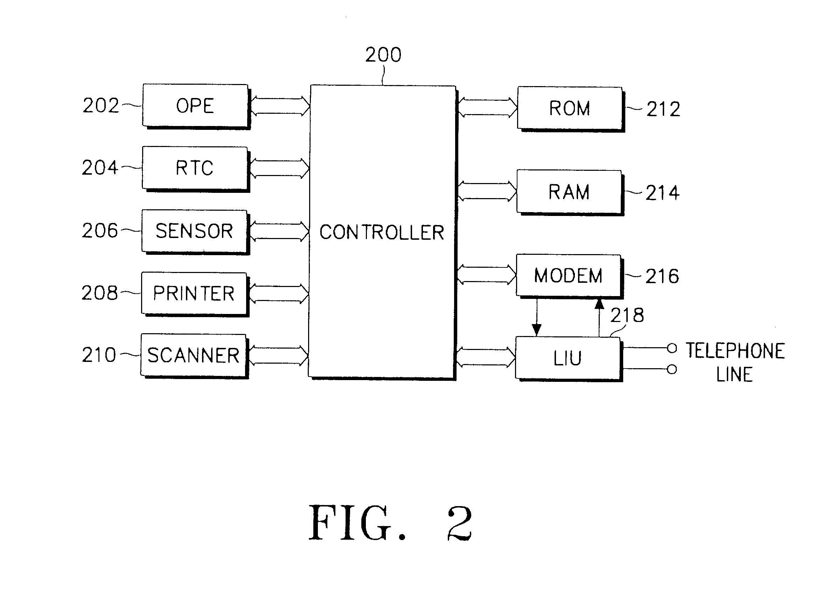

Referring to Fig. 2, a common facsimile to which the present invention is applicable includes a controller 200 for controlling the overall operation of the facsimile according to a control program stored in a ROM (Read Only Memory) 212. An operating panel equipment (OPE) 202 includes a plurality of numeric and function keys and a display unit, so as to generate key data according to key depressions of the user and to display the operational status of the facsimile under the control of the controller 200. A real time clock (RTC) 204 provides the controller 200 with current time information.

A sensor 206 senses the residual quantity of recording sheets, the supply of an original document and the operational status of each part of the facsimile. The sensed data is transferred to the controller 200. A printer 208 prints on the record sheets image data received from the calling facsimile or scanned by a scanner 210, under the control of the controller 200. The scanner 210 scans the original document to generate image data and provides the controller 200 with the scanned image data. The ROM 212 stores the control program for the controller 200, a protocol control program and various kinds of reference data. A RAM (Random Access Memory) 214 temporarily stores data generated in the course of executing the control program.

A modem 216 modulates the data output from the controller 200 and the image data into an analog signal and transfers the modulated analog signal to the called facsimile via a line interface unit (LIU) 218. Further, the modem 216 demodulates the analog signal received from the calling facsimile and provides the controller 200 with the demodulated signal. The line interface unit 218 forms a communication path between the modem 216 and a telephone line (i.e., a central office line) under the control of the controller 200.

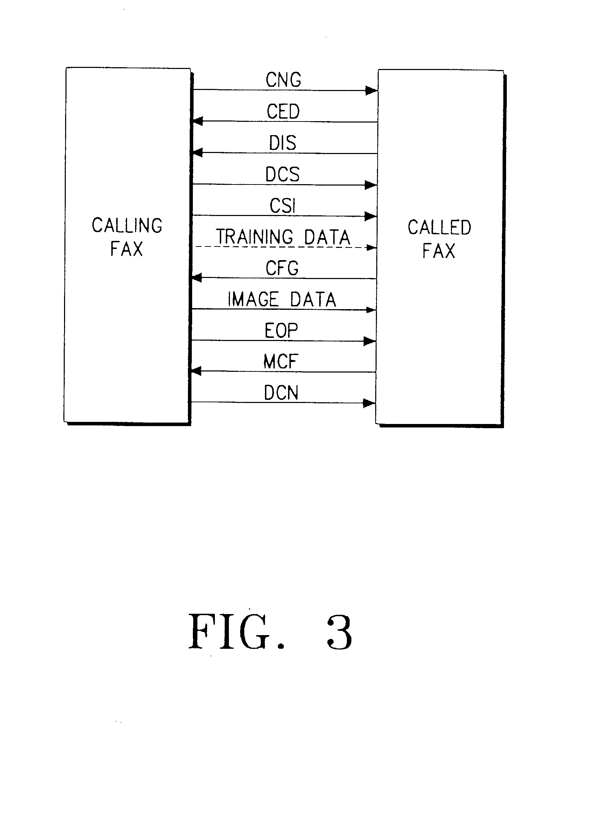

Fig. 3 shows a control procedure for transmitting a facsimile message from a calling facsimile 300 to a called facsimile 302. In operation, upon receiving a ring signal from the calling facsimile 300, the called facsimile 302 connects the modem 216 to the telephone line via the line interface circuit 218. Then, the calling facsimile 300 and the called facsimile 302 exchange a calling tone CNG and a called station identification CED, to set up a call. Thereafter, the calling facsimile 300 and the called facsimile 302 exchange in sequence a digital identification signal DIS, a digital command signal DCS, the calling subscriber identification code CSI, training data and a confirmation-to-receive signal CFR, so as to check and set up for mutual capabilities.

Next, the calling facsimile 300 transmits the facsimile message (i.e., the image data) to the called facsimile 302. After completion of transmitting the facsimile message, the calling facsimile 300 and the called facsimile 302 exchange in sequence an end-of-procedure signal EOP, a message confirmation signal MCF and a disconnect signal DCN. Upon receiving the disconnect signal DCN, the line interface unit 218 of the called facsimile 302 disconnects the telephone line from the modem 216, to conclude the data communication between the calling facsimile 300 and the called facsimile 302.

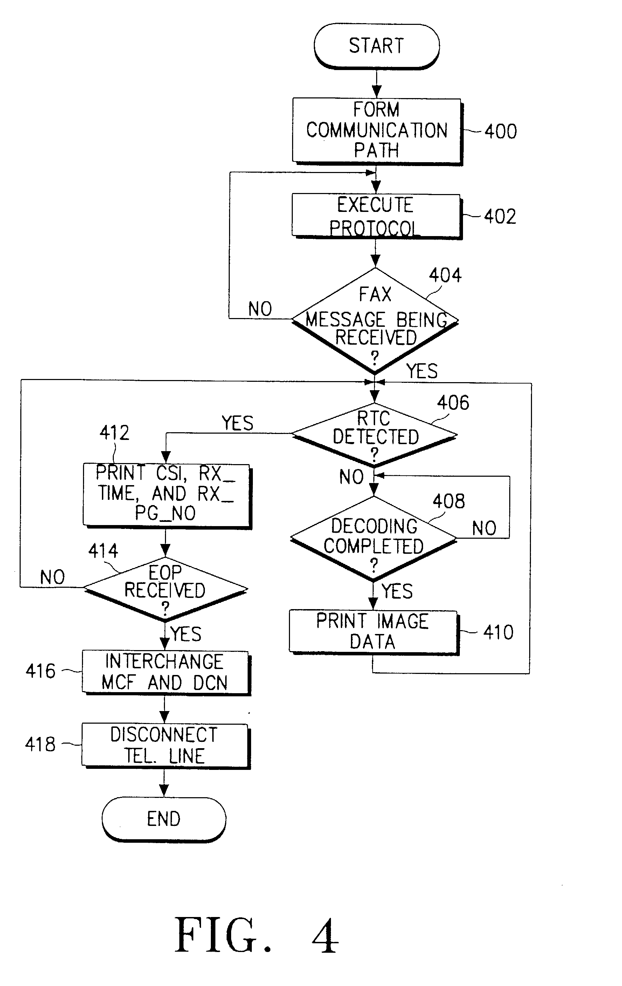

Fig. 4 shows a flow chart for printing the receiving information of the facsimile message according to an embodiment of the present invention, in which the control procedure is programmed in the ROM 212. Upon receiving the ring signal from the calling facsimile 300, the line interface unit 218 of the called facsimile 302 connects the modem 216 to the telephone line to form a communication path, under the control of the controller 200. The called facsimile 302 performs the control procedure as shown in Fig. 3, at step 402. At that point, the CSI code received from the calling facsimile 300 is stored in the RAM 214. The called facsimile 302 checks at step 404 whether the facsimile message has begun to be received from the calling facsimile 300.

When starting to receive the facsimile message from the calling facsimile 300, the called facsimile 302 checks at step 406 whether the real time clock RTC is detected. If the real time clock RTC is not detected, the facsimile 302 decodes by the line the image data of the facsimile message received from the calling facsimile 300 and prints (on the recording sheet) by the line the decoded image data using the printer 208 at steps 408 and 410. The real time clock RTC is a code representing an end of a current page, in a coding procedure of the facsimile. If the real time clock RTC is not detected after receipt of the facsimile message has begun, it is considered that the facsimile message is still being received from the calling facsimile 300. That is, the called facsimile 302 will continue to print the facsimile message, as long as the real time clock RTC is not detected.

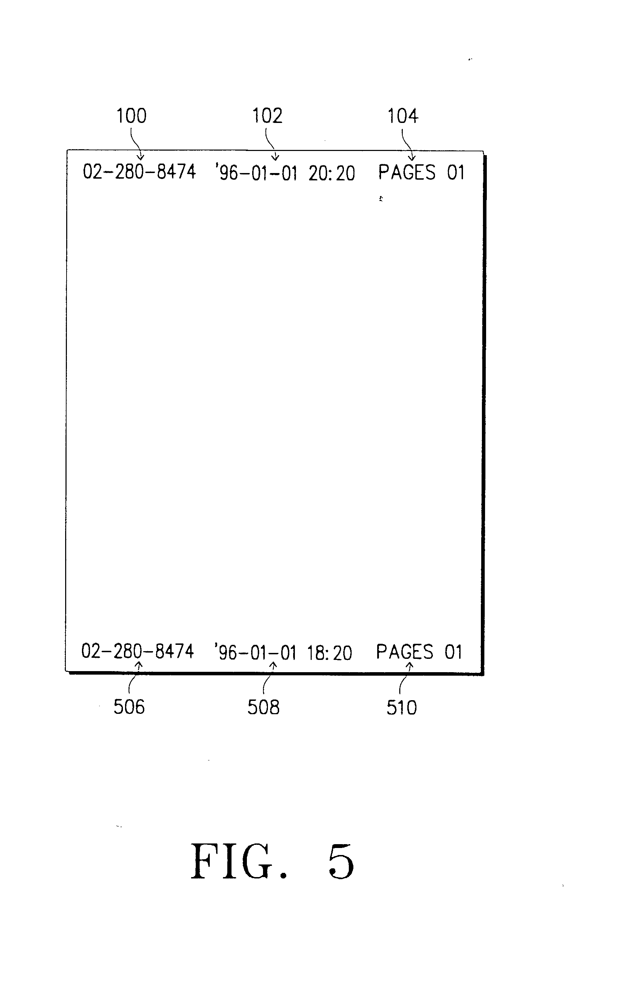

In the meantime, if the real time clock RTC is detected at step 406, the called facsimile 302 recognizes that the facsimile message of the current page has been completely received. Then, at step 412, the printer 208 prints the CSI code 506 stored in the RAM 214, a receiving time (Rx_Time) 508 of the facsimile message and a page number (Rx_Pg_No) 510 of the sheets received, on the bottom of the recording sheet, as shown in Fig. 5, under the control of the controller 200. Of course, the called facsimile 302 may print a CSI code 500, a transmission time 502 and the page number 504 of the sheets transmitted on the top of the recording sheet in the conventional manner. In Fig. 5, the recording sheet according to the present invention has the CSI codes ("02-280-8474") 500 and 506 of the calling facsimile 300, the transmission time ('96-01-01 20:20) 502 printed on the top, the receiving time ('96-01-01 18:20) 508 printed on the bottom, and the page numbers (PAGES 01) 504 and 510 of the transmitting and receiving sheets.

After printing the receiving information of the facsimile message, the called facsimile 302 checks at step 414 whether the end-of-page signal EOP is received from the calling facsimile 300. If the end-of-page signal EOP is received, the called facsimile 302 and the calling facsimile 300 exchange the message confirmation MCF and the disconnect signal DCN, as shown in Fig. 3, at step 416. Upon receiving the disconnect signal DCN from the calling facsimile 300, the line interface unit 218 of the called facsimile 302 disconnects the telephone line from the modem 216 at step 418, under the control of the controller 200. However, if the end-of-page signal EOP is not received, the procedure returns to step 406 to print the receiving information of the facsimile message for the next page, in the same manner as described above.

In the light of the foregoing descriptions, it will clearly be understood that the called facsimile may print the CSI code of the calling facsimile, the time of receipt of the facsimile message and the page number of the received sheets, even if the calling facsimile does not have the functionality for transmitting the transmitting information. Thus, the called subscriber may readily recognize the calling subscriber and the receiving time of the facsimile message, without wastage of record sheets.

It will also be understood that the details of the receiving information of the facsimile message may be freely selected and need not comprise the CSI or the page numbers as described above.

## Claims

1. A method of operating a facsimile comprising:
receiving a facsimile message transmitted from a calling facsimile; and
printing the received facsimile message together with information identifying its local time of receipt.

2. A method according to claim 1 comprising, for each page of the facsimile message:
determining that the current page of the facsimile message has been completely received; and
printing the current page together with the said information.

3. A method according to claim 1 or claim 2 in which the said information identifying the local time of receipt of the facsimile message is its local time of receipt.

4. A method according to any preceding claim in which the said information is printed together with a calling subscriber identification (CSI) and/or a page number of the received sheets.

5. A method according to any preceding claim in which the said information is printed on the bottom of every sheet.

6. A facsimile comprising:
means for receiving a facsimile message transmitted from a calling facsimile; and
means for printing the received facsimile message together with information identifying its local time of receipt.

7. A facsimile according to claim 6 in which the means for printing the received facsimile message is adapted, for each page of the facsimile message, to operate as follows:
to determine whether the current page of the facsimile message has been completely received; and
if so, to print the current page together with the said information.

8. A facsimile according to claim 6 or claim 7 in which the means for printing the received facsimile message is adapted to print the said information on the bottom of every sheet.

9. A method of operating a facsimile, the method being as described with reference to and/or as illustrated in FIGs. 4 and 5 of the accompanying drawings.

10. A facsimile as described with reference to FIGs. 4 and 5 of the accompanying drawings.
